# EUROPÄISCHE PATENTSCHRIFT

(11) **EP 2 362 159 B1**
(45) Veröffentlichungstag und Bekanntmachung des Hinweises auf die Patenterteilung: **04.05.2016**
(21) Anmeldenummer: 10154105.0
(22) Anmeldetag: 19.02.2010
(51) Int. Cl.: F24J 2/46

(54) **Solarkollektorgehäuse und Verfahren zur Montage eines Solarkollektorgehäuses**
Solar collector housing and method for assembly of a solar collector housing
Boîtier de collecteur solaire et procédé d' assembler un boîtier de collecteur solaire

(43) Veröffentlichungstag der Anmeldung: 31.08.2011
(73) Patentinhaber: Ernst Schweizer AG, Metallbau, 8908 Hedigen (CH)
(72) Erfinder: Weiss, Hanspeter, 5622 Waltenschwil (CH); Schläpfer, Bruno, 8903 Birmensdorf (CH); Spiri, Thomas, 8049 Zürich (CH); Wirth, Christoph A., 88487 Mietingen (DE)
(74) Vertreter: Liebetanz, Michael

(56) Entgegenhaltungen:
- EP-A1- 1 775 525
- DE-A1- 19 702 380
- DE-U1- 20 102 770
- DE-U1- 20 316 135

## Beschreibung

### TECHNISCHES GEBIET

Die vorliegende Erfindung betrifft ein Solarkollektorgehäuse nach dem Oberbegriff des Anspruchs 1 und ein Verfahren zur Montage eines Solarkollektorgehäuses nach Anspruch 12.

### STAND DER TECHNIK

Aus dem Stand der Technik sind Sonnenkollektoren zur Nutzung der Sonnenenergie bekannt. Typischerweise umfassen die Sonnenkollektoren einen Rahmen, welcher einen Innenraum zur Aufnahme eines Absorberbleches und der dazugehörigen Absorberleitungen bereitstellt. Der Innenraum wird nach hinten durch eine Abdeckung und nach vorne mit einer Solarglasscheibe begrenzt. Die Absorberleitungen werden dabei durch ein Wärmeträgermedium durchströmt, welches sich während der Durchströmung durch die Sonneneinstrahlung erwärmt.

Aus dem Stand der Technik sind verschiedene Lösungen zur Befestigung der Solarglasscheibe bekannt. Beispielsweise zeigt die WO 2004/111 550 eine Lösung, bei welcher die Glasscheibe ausschliesslich mittels eines Klebstoffes mit dem Rahmen verbunden wird. Weiter wird ein Kantenschutz vorgeschlagen, welcher die Konstruktion schützen soll. Die Praxis hat allerdings gezeigt, dass sich ein derartig ausgebildeter Kantenschutz leicht vom Solarkollektor lösen kann und auch bei der Montage unvorteilhaft ist.

Weiter ergeht vor allem bei grossflächigen Solarkollektoren der Nachteil, dass sich die Solarglasscheibe durch ihr Eigengewicht bei der Montage durchbiegt. Insbesondere in den Ecken des Solarkollektorgehäuses ist dies ein Nachteil, da sich das Durchbiegen der Solarglasscheibe in diesem Bereich dahingehend auswirkt, dass die Ecken der Scheibe vom Rahmen, auf welchem die Solarglasscheibe vollständig aufliegen soll, weg gebogen werden. In der Praxis ist man dazu übergegangen, die Ecken mit Gewichten zu beschweren, so dass die Solarglasscheibe an jeder Stelle auf dem Rahmen aufliegt.

Allerdings musste dann die Anordnung solange mit den Gewichten beschwert werden, bis die Dichtmasse bzw. der Klebstoff, welche die Verbindung zwischen Solarglasscheibe und Profilrahmen abdichtet bzw. herstellt, vollständig ausgehärtet war. Dies führt zu unerwünscht langen Montagezeiten.

DE 203 16 135 und DE 201 02 770 zeigen beide einen Rahmen für einen Sonnenkollektor, sowie einen Sonnenkollektor. Der Aufbau dieser Kollektoren, insbesondere die Befestigung der Kollektorscheibe, ist äusserst kompliziert und somit fehleranfällig sowie zeitaufwendig bei der Montage.

EP 1 775 525 zeigt ebenfalls einen Sonnenkollektor, wobei die Ausbildung hier beim Transport nachteilig ist. Zudem kann sich bei Versagen des Klebstoffes zwischen Scheibe und Rahmen die Scheibe vom Rahmen ablösen, was im Betrieb mit eine Reihe von Nachteilen mit sich bringt.

### DARSTELLUNG DER ERFINDUNG

Ausgehend vom Stand der Technik liegt der Erfindung eine Aufgabe zugrunde, ein Solarkollektorgehäuse mit einer Solarglasscheibe anzugeben, welches die Nachteile des Standes der Technik überwindet. Insbesondere soll das Solarkollektorgehäuse in einer kürzeren Zeit montierbar sein. Zudem soll das Kollektorgehäuse robuster ausgebildet sein.

Diese Aufgabe löst ein Solarkollektorgehäuse nach Anspruch 1 sowie ein Verfahren zur Montage eines Solarkollektorgehäuses nach Anspruch 12. Demgemäss umfasst ein Solarkollektorgehäuse einen durch Rahmenprofile gebildeten Rahmen und eine Solarglasscheibe mit Oberflächen und Seitenkanten, wobei das Rahmenprofil einen Kanal umfasst, welcher von Wandelementen begrenzt wird. Der Kanal ist mit einer Dichtmasse befüllt, so dass der Übergang zwischen Kanal und Solarglasscheibe, insbesondere gegenüber Fluiden, dicht ausgebildet ist. Das Solarkollektorgehäuse umfasst weiterhin mindestens ein Klemmelement, welches mit mindestens einem Vorsprung zwischen die Seitenkante und einem den Kanal begrenzenden Wandelement zu liegen kommt. Das Klemmelement ist über mindestens ein Einrastelement mit dem Rahmenprofil verbindbar ist.

Mit dem Klemmelement können die Ecken der Solarglasscheibe, welche sich aufgrund der Durchbiegung der Solarglasscheibe vom Rahmenprofil leicht anheben, in Richtung des Rahmens gedrückt werden, so dass eine einwandfreie Montage erfolgen kann. Weiter wirken die Klemmelemente als Sicherungselemente, falls es zum Versagen des Klebstoffes bzw. der Dichtmasse komme sollte, wobei die Solarglasscheibe, dann von den Klemmelementen am Rahmen gehalten wird. In dem Falle hätten die Klemmelemente die alleinige Haltefunktion. Hierdurch wird das Kollektorgehäuse robuster ausgebildet.

Vorzugsweise ragt der mindestens eine Vorsprung mindestens teilweise in die im Kanal vorhandene Dichtmasse ein. Dadurch entsteht eine stoffschlüssige Verbindung zwischen Klemmelement und Dichtmasse und das Klemmelement ist zusätzlich gesichert.

Zwischen dem mindestens einen Vorsprung und der Seitenkante der Solarglasscheibe und/oder dem Wandelement ist vorzugsweise ein Zwischenraum vorhanden. Der mindestens eine Vorsprung ist vorzugsweise in Kontakt mit der Seitenkante der Solarglasscheibe und/oder dem Wandelement.

Bevorzugt umfasst das Rahmenprofil einen Klemmabschnitt, in welchen das Klemmelement mit dem Einrastelement einrastbar ist.

Vorzugsweise liegt die Solarglasscheibe unmittelbar in direktem Kontakt auf einem der Wandelemente auf. Dies ist bezüglich der Dauerhaftigkeit eine vorteilhafte Ausführungsform.

Das Klemmelement weist bevorzugt einen ersten Abschnitt und einen zweiten Abschnitt auf, welche in einem Winkel zueinander stehen, so dass das Klemmelement im Bereich einer Verbindungsstelle zwischen zwei Rahmenprofilen, welche im gleichen Winkel stehen, angeordnet werden kann.

Vorzugsweise weist das Klemmelement mindestens eine Verstärkungsrippe auf, welche vorzugsweise eine Form aufweist, die komplementär zu einem Hohlraum ist, der am Rahmenprofil gegenüber des Kanals angeordnet ist, so dass die Verstärkungsrippe in diesen Hohlraum einragt, wenn zwei Solarkollektoren bzw. Solarkollektorgehäuse übereinander gestapelt werden. Dadurch können mehrere Solarkollektoren in einfacher Art und Weise übereinander gestapelt werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: einen vereinfachte Darstellung eines Ausschnittes von einem Solarkollektorgehäuse mit einem Klemmelement nach einer Ausführungsform der Erfindung;
- Fig. 2: eine Schnittdarstellung durch den Solarkollektor;
- Fig. 3: eine Detailansicht von Figur 2;
- Fig. 4: eine perspektivische Ansicht des Klemmelementes von Figur 1 von unten; und
- Fig. 5: eine perspektivische Ansicht des Klemmelementes von Figur 1 von oben.

### BESCHREIBUNG BEVORZUGTER AUSFÜHRUNGSFORMEN

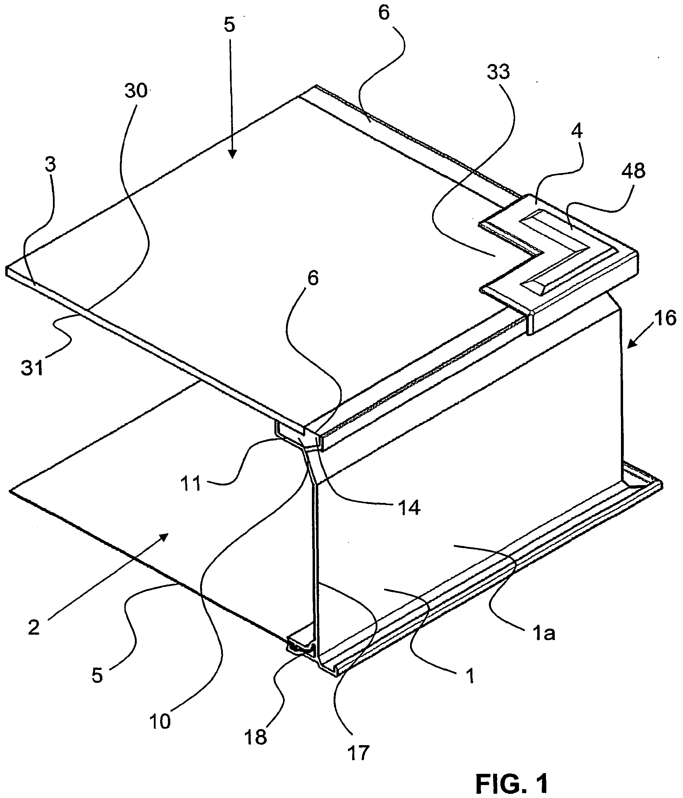

Die Figur 1 zeigt eine vereinfachte Darstellung einer Gehäuseanordnung eines Solarkollektors. Die Gehäuseanordnung umfasst im wesentlichen einen aus Rahmenprofilen 1, 1a, 1b gebildeten Rahmen, eine Sölarglasscheibe 3 und Klemmelemente 4, wobei durch die Rahmenprofile 1, 1a, 1b ein Innenraum 2 bereitgestellt wird. Nach oben hin wird der Innenraum 2 durch die Solarglasscheibe 3 verschlossen. Nach unten hin, also gegenüber der Solarglasscheibe 2, kann ein Bodenelement 5 vorgesehen sein. Der Innenraum 2 dient im wesentlichen der Aufnahme von Absorbereinheit und Isoliereinheit etc., welche hier nicht dargestellt sind. Über die Solarglasscheibe 3 kann Sonnenlicht S in den Innenraum 2 eintreten und dort auf die Absorbereinheit einwirken.

Vorzugweise ist der Rahmen aus vier Rahmenprofilen 1, 1a, 1b gebildet, so dass ein rechteckiger oder quadratischer Solarkollektor geschaffen werden kann, wobei alle Rahmenprofile gleichartig ausgebildet sind. Bei den Rahmenprofilen 1, 1a, 1b handelt es sich beispielsweise um gezogene Aluminiumprofile.

Das Rahmenprofil 1 umfasst einen Kanal 10, welcher durch die Wandelemente 11 und 14 gebildet wird, und einen sich den Wandelementen 11, 14 anschliessenden Hauptsteg 17. An dem dem Kanal 10 gegenüberliegenden Ende schliesst sich dem Hauptsteg 17 ein Aufnahmeabschnitt 18 für das Bodenelement 5 an. Das Bodenelement 5 wird durch ein Umformverfahren mit dem Aufnahmeabschnitt 18 verbunden, wobei mit letzterem das Bodenelement 5 über eine Klemmverbindung mit dem Rahmenprofil 1, 1a, 1b verbunden wird.

Im Bereich des Kanals 10 ist der Hauptsteg leicht abgekröpft ausgebildet und neigt sich dem Innenraum 2 zu.

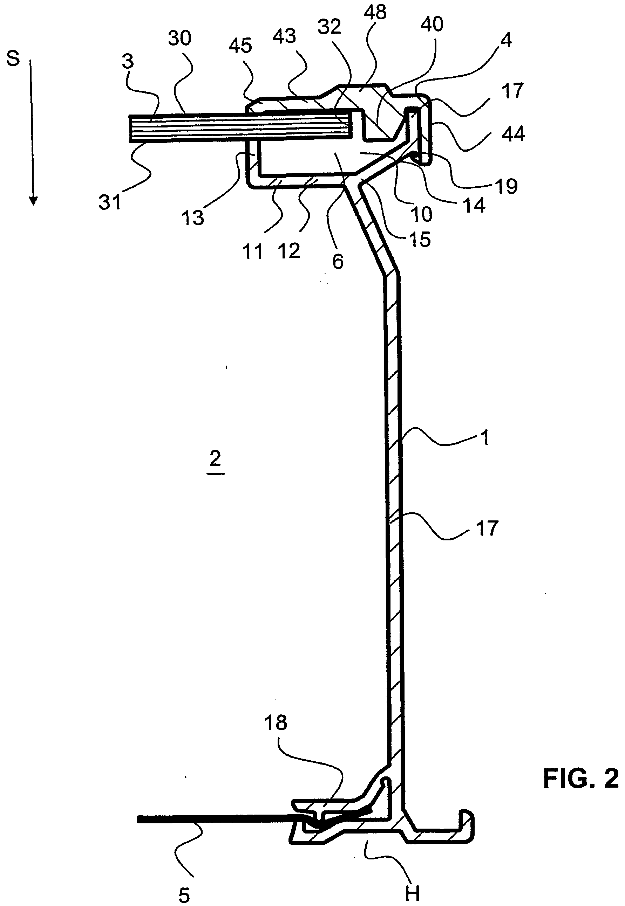

In der Figur 2 kann die Ausbildung des Profils gut erkannt werden. Der Kanal 10 wird, wie bereits erwähnt, durch mehrere Wandelemente gebildet. In der vorliegenden Ausführungsform erstreckt sich ein inneres Wandelement 11 vom Hauptsteg 17 in den Innenraum 2. Das innere Wandelement 11 umfasst einen ersten Abschnitt 12, welcher sich im wesentlichen senkrecht zum Hauptsteg 17 erstreckt, und einen zweiten Abschnitt 13, welcher sich senkrecht zum ersten Abschnitt 12 erstreckt. Auf dem zweiten Abschnitt 13 kann die Solarglasscheibe 3 aufliegen. Weiter erstreckt sich ein äusseres Wandelement 14 vom Hauptsteg 13 vom Innenraum 2 weg nach aussen. Das äussere Wandelement 14 umfasst ebenfalls einen ersten Abschnitt 15 und einen zweiten Abschnitt 16, wobei der erste Abschnitt 15 hier winklig zum Hauptsteg 17 verläuft und der zweite Abschnitt 16 erstreckt sich vom ersten Abschnitt 15 nach oben.

Der Kanal 10 kann aber auch anders ausgebildet sein. Wichtig ist, dass der Kanal 10 mit einer Dichtmasse 6 befüllt werden kann, so dass der Übergang zwischen Kanal 10 und Solarglasscheibe 3 dicht ausgebildet ist. Dabei erstreckt sich die Dichtmasse 6 vorzugsweise um den ganzen Umfang der Solarglasscheibe. Unter einer dichten Ausbildung wird verstanden, dass keine Feuchtigkeit in den Innenraum durch die Verbindungsstelle Rahmenprofil 1 und Solarglasscheibe 2 eintreten kann. Die Dichtmasse hat jedoch nicht nur die Funktion der Abdichtung, sondern auch die Funktion eines Klebers, welcher die Solarglasscheibe 3 an den Rahmen klebt.

In einer alternativen Ausführungsform, kann das äussere Wandelement 14 beispielsweise durch den Hauptsteg 17 gebildet werden.

In diesem Zusammenhang sei erwähnt, dass es besonders vorteilhaft für die Wirkung der Dichtmasse 6 ist, wenn diese bündig zur Oberfläche 30 der Solarglasscheibe 3 in den Kanal 10 eingefüllt werden kann. Der Kanal 10 soll also vollständig mit der Dichtmasse 6 befüllt sein. Daher ist es auch bevorzugt, dass das äussere Wandelement 12 mit dem zweiten Abschnitt 16 auf der Höhe der Oberfläche 30 zu liegen kommt. Abgesehen von der guten Dichtwirkung wird mit einer derartigen Ausführungsform auch verhindert, dass sich Wasser im Bereich der Dichtmasse ansammelt, da aufgrund der bündigen Auffüllung keine entsprechende Stellen, wo sich Wasser ansammeln kann, vorhanden sind.

Die Dichtmasse hat zudem auch die Wirkung, dass die Solarglasscheibe 3 fest mit dem Rahmenprofil 1 verbunden wird. Daher kann auch gesagt werden, dass die Dichtmasse die Wirkung eines Klebstoffes hat.

Vorzugsweise ist die Dichtmasse aus einem Ein- oder Zweikomponenten-Silikonklebstoff. Andere Arten von Dichtmassen bzw. Klebstoffen können ebenfalls eingesetzt werden.

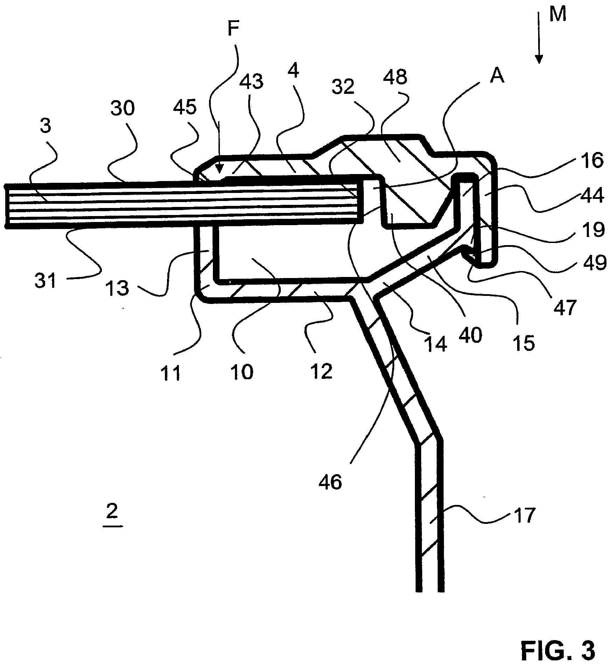

In der Figur 3 kann erkannt werden, dass das äussere Wandelement 14 weiterhin einen Klemmabschnitt 19 umfasst. Der Klemmabschnitt 19 ist hier als Vorsprung ausgebildet, welcher sich vom zweiten Abschnitt 16 leicht in Richtung des Bodenelementes 5 erstreckt. Der Klemmabschnitt 19 dient der Aufnahme von Teilen des Klemmelementes 4, wie dies nachfolgend beschrieben wird.

Das Klemmelement 4, dessen Ausbildung unten beschrieben wird, ist derart mit dem Rahmenprofil 1 verbunden, dass das Klemmelement 4 auf der Oberfläche 30 der Solarglasscheibe 3 aufliegt. Vorzugsweise bringt das Klemmelement 4 gar eine Kraft F auf die Solarglasscheibe 3, so dass diese gegen das innere Wandelement 11, auf dessen zweiten Abschnitt 13 die Solarglasscheibe 3 aufliegt, gedrückt wird. Bei der Montage der Solarglasscheibe 3 ist das Klemmelement 4 besonders vorteilhaft, da das Klemmelement 4 verhindert, dass die Ecken 33 sich aufgrund einer Durchbiegung der Solarglasscheibe 3 in deren mittleren Bereich der Solarglasscheibe 3 nach oben, also vom Kanal 10 weg, bewegen. Es kann also gesagt werden, dass das Klemmelement 4 als Niederhalter für die Solarglasscheibe 3 wirkt. Aufgrund dieser Niederhaltefunktion kann die Montagezeit des Solarkollektors deutlich verkürzt werden, da das Beschweren der Ecken mit Montagegewichten entfällt. Bei besonders grossen Solarglasscheiben ist es zudem denkbar, dass die Ecken weiterhin mit Gewichten beschwert werden und unmittelbar nach dem Einspritzen der Dichtmasse die Klemmelemente 4 montiert werden.

Weiter hat das Klemmelement 4 den Vorteil, dass ein Kantenschutz für das Solarkollektorgehäuse bereitgestellt wird, insbesondere, wenn es an den Ecken 33 angeordnet wird. Dies schützt sowohl das Solarkollektorgehäuse selbst, als auch die Monteure bei der Montage des Solarkollektors an seinem Bestimmungsort. Zudem erlaubt das Klemmelement 4 auch das Stapeln von mehreren Solarkollektoren aufeinander für beispielsweise Lagerung und Transport. Ein Einlegen von Schutzmaterial zwischen zwei Kollektoren entfällt.

Alternativ oder zusätzlich kann ein derartiges Klemmelement 4 auch zwischen zwei Ecken 33 angeordnet sein, wobei es dann nicht die winklige Ausbildung, wie untenstehend beschrieben, aufweist, sondern sich entlang einer Geraden erstreckt.

In der Figur 3 wird eine Schnittdarstellung des Klemmelementes 4 gezeigt. Das Klemmelement 4 umfasst mindestens einen Vorsprung 40, welcher sich von einem Basisabschnitt 43 erstreckt. Dem Basisabschnitt 43 ist zudem ein Einrastelement 44 angeformt, welches am Klemmabschnitt 19 des Rahmenprofils einrasten kann. Gegenüber vom Einrastelement 44 umfasst das Klemmelement einen optionalen Einwirkabschnitt 45, welcher auf die Oberfläche 30 der Solarglasscheibe 3 wirkt. Ohne den Einwirkabschnitt 45 wirkt direkt der Basisabschnitt 43 auf die Oberfläche 30. Insofern ist der Basisabschnitt 43 dann der Einwirkabschnitt 45. Im Bereich des Vorsprungs 40 kann das Klemmelement 4 zusätzlich mit einer Verstärkungsrippe 48 versehen sein, welche sich hier vom Basisabschnitt 43 nach oben hin erstreckt.

Der Einrastabschnitt 44 steht vorzugsweise senkrecht zum Basisabschnitt 43 und umfasst an seinem Ende eine Rastnase 49, mit welcher eine Einrastverbindung zwischen Klemmelement 4 und dem Klemmabschnitt 19 des Rahmenprofil 1 herstellbar ist.

Vorzugsweise ist das Klemmelement 4 aus einem metallischen Werkstoff gefertigt und ist einstückig ausgebildet. Besonders bevorzugt ist beispielsweise ein Klemmelement aus einem Aluminium-Druckguss oder einem Zink-Druckguss hergestellt. Alternativ können auch Kunststoffe für das Klemmelement 4 eingesetzt werden. Besonders gute Resultate werden mit Kunststoffen wie UV-stabilisiertes Polyamid, PET, Polycarbonat, POM Polyacryl oder Mischungen daraus erzielt. Diese Kunststoffe sind können zur Erhöhung der Festigkeit und Dauerhaftigkeit faserverstärkt sein.

Der Vorsprung 40 kommt in der montierten Stellung zwischen der Seitenkante 32 der Solarglasscheibe 3 und einem den Kanal 10 begrenzenden Wandelement, hier der zweite Abschnitt 16 des äusseren Wandelementes 14, zu liegen. Das Einrastelement 44 geht im montierten Zustand einen Eingriff mit dem Klemmabschnitt 19 des Rahmenprofils 1 ein, und der Einwirkabschnitt 45 wirkt direkt auf die Oberfläche 30 der Solarglasscheibe 3.

Bei der Montage wird das Klemmelement 4 von oben entlang der Pfeilrichtung M gegen die auf dem Rahmenprofil 1 aufliegende Solarglasscheibe 3 geschoben. Dabei wird das Einrastelement 44 leicht nach aussen, also vom entsprechenden Wandelement 14 weg gebogen, und rastet dann aufgrund der entsprechenden Rückbewegung am Klemmabschnitt 19 ein, sobald das Klemmelement 4 seine finale Position erreicht hat. Der Vorsprung 40 kommt auf die dem Kanal 10 zugewandte Oberfläche des entsprechenden Wandelementes, hier dem äusseren Wandelement 14, zu liegen. Zwischen dem Vorsprung 40 und dem Seitenrand 32 der Solarglasscheibe 3 ist ein Zwischenraum A vorhanden.

In alternativen Ausführungsformen kann der Vorsprung derart ausgebildet sein, dass dieser sowohl am Wandelement 14 als auch am Seitenrand 32 der Solarglasscheibe 3 ansteht, wobei dann der Zwischenraum A nicht mehr vorhanden ist. Weiter ist es auch denkbar, dass der Vorsprung 40 derart ausgebildet ist, dass dieser nur am Seitenrand 32 der Solarglasscheibe 32 anliegt, wobei dann der Zwischenraum zwischen Wandelement 14 und Vorsprung 40 vorhanden wäre.

Die Bewegung des Klemmelementes 4 senkrecht zur Oberfläche 30 wird also durch die formschlüssige Verbindung zwischen Klemmelement 4 und Rahmenprofil 1 eingeschränkt, während die Bewegung parallel zur Oberfläche 30 durch das Anliegen des Vorsprungs 40 am Wandelement 14 eingeschränkt wird. Eine weitere Restriktion bezüglich der Bewegung ergeht, weil das Klemmelement 4 mit dem Vorsprung 40 mindestens teilweise in die im Kanal 10 eingefüllte Dichtmasse einragt und somit eine Klebeverbindung zwischen Dichtmasse und Klemmelement bereitgestellt wird.

Obwohl die Dichtmasse im Kanal 10 bei schräg oder gar senkrecht montiertem Solarkollektor eine Verschiebung zwischen Solarglasscheibe 3 aufgrund der Einwirkung der Schwerkraft gegenüber dem Rahmenprofil 1 bereits weitgehend verhindert, vergrössert das Klemmeelement 4 den diesbezüglichen Widerstand. Dies insbesondere aufgrund der Tatsache, dass die Schwerkraft über die Vorsprünge 40 auf das Rahmenprofil 1 geleitet werden kann.

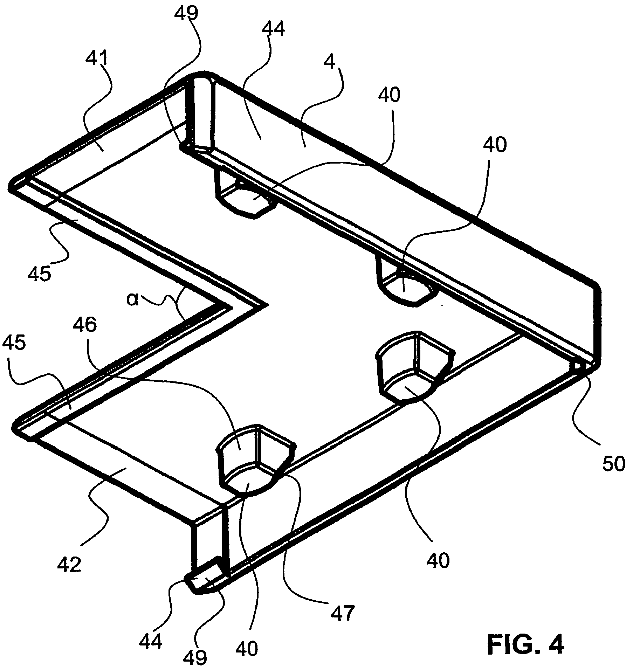

In der Figur 4 wird eine perspektivische Ansicht des Klemmelementes 4 von unten gezeigt. Es handelt sich dabei um eine Ausführungsform des Klemmelementes 4, welches an einer Ecke eines Solarkollektorgehäuses angeordnet werden kann. Das Klemmelement 4 umfasst hier einen ersten Abschnitt 41 und einen zweiten Abschnitt 42. Die beiden Abschnitte 41, 42 stehen in einem Winkel α zueinander, wobei der Winkel α dem Winkel des Solarkollektorgehäuses entspricht. Bei rechteckigen Gehäusen ist der Winkel 90°.

In dem Bereich, in welchem die beiden Einrastelemente 44 der Abschnitt 41 und 42 zusammentreffen, ist hier eine Ausnehmung 50 vorgesehen, welche Toleranzen beim Zusammenfügen des Rahmens kompensieren kann.

In der Darstellung nach der Figur 4 kann die Anordnung der Vorsprünge 40 gut erkannt werden. Pro Abschnitt 41, 42 sind hier je zwei Vorsprünge 40 angeordnet. Alternativ kann auch nur ein Vorsprung 40 oder aber eine grössere Anzahl, wie drei, vier, fünf, sechs oder noch mehr Vorsprünge 40 angeordnet werden. Die hier dargestellten Vorsprünge 40 weisen in den Abschnitten, welcher dann der Solarglasscheibe 3 zugewandt ist, eine konvexe Oberfläche 46 auf. Dies hat den Vorteil, dass die Solarglasscheibe 3 an einem definierten Punkt auf der konvexen Oberfläche 46 aufliegt. Weiter wird die Flächenpressung durch die Wahl eines verhältaismässig grossen Radius reduziert.

Der dem Rahmenprofil 1 zugewandte Abschnitt 47 des Vorsprungs 40 ist, wie in der Figur 3 besser erkannt werden kann, abschnittsweise winklig zum jeweiligen Abschnitt des Rahmenprofils ausgebildet. Diese Ausbildung ermöglicht eine einfache Montage des Klemmelementes 40.

Bei der Anordnung von einem einzigen Vorsprung 40 pro Abschnitt 41 bzw. 42 kann dieser auch derart ausgebildet sein, dass sich der Vorsprung 40 über den gesamten Abschnitt 41 bzw. 42 erstreckt.

Weiter kann in der Figur 4 auch der Einwirkabschnitt 45 gut erkannt werden. Der Einwirkabschnitt 45 erstreckt sich hier jeweils vollständig über den jeweiligen Abschnitt 41, 42, kann aber in alternativen Ausführungsformen auch abschnittsweise unterbrochen sein.

Die Rastnase 49 des Einrastelementes 44 erstreckt sich vorzugsweise nur über einen Teilbereich des jeweiligen Abschnittes 41, 42. Allerdings ist es diesbezüglich ebenfalls denkbar, mehrere Rastnasen 49 anzuordnen oder aber eine einzige Rastnase, welche sich über die gesamte Länge des jeweiligen Abschnittes erstreckt, vorzusehen.

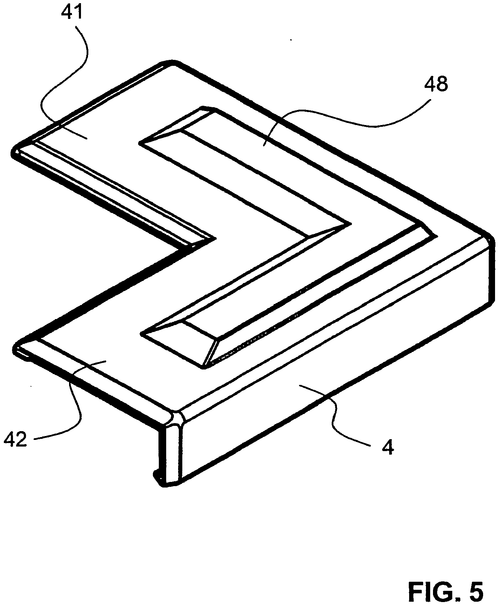

In der Figur 5 wird das Klemmelement 4 in einer perspektivischen Darstellung von oben gezeigt. Hier kann gut erkannt werden, wie sich die Verstärkungsrippe 48 teilweise über den jeweiligen Abschnitt 41, 42 erstreckt. Im Bereich, wo die beiden Abschnitte 41, 42 zusammen kommen, gehen ebenfalls die Verstärkungsrippen 48 ineinander über.

An der Stelle ist noch anzumerken, dass die Verstärkungsrippen 48 vorzugsweise derart angeordnet werden, dass diese in einen Hohlraum H des Rahmenprofils 1 eines auf dem Klemmelement 4 aufliegenden Solarkollektors einragen können. Somit kann auch sichergestellt werden, dass sich zwei aufeinander liegende Solarkollektoren während des Transportes nicht relativ zueinander verschieben. Insofern weisen Hohlraum H und Verstärkungsrippen 48 vorzugsweise die gleiche Querschnittsform auf.

Bezüglich den Figuren 4 und 5 wird an dieser Stelle nochmals angemerkt, dass das Klemmelement 4 auch derart ausgebildet werden kann, dass es zwischen zwei Ecken angeordnet werden kann. Das heisst, der Winkel α zwischen den beiden Abschnitten wäre dann 180° oder einer der beiden Abschnitte würde entfallen.

**BEZUGSZEICHENLISTE**

| | | | |
|---|---|---|---|
| 1 | Rahmenprofil | 31 | Oberfläche |
| 2 | Innenraum | 32 | Seitenkanten |
| 3 | Solarglasscheibe | 33 | Ecken |
| 4 | Klemmelement | | |
| 5 | Bodenelement | 40 | Vorsprung |
| 6 | Dichtmasse | 41 | erster Abschnitt |
| | | 42 | zweiter Abschnitt |
| 10 | Kanal | 43 | Basisabschnitt |
| 11 | inneres Wandelement | 44 | Einrastelement |
| 12 | erster Abschnitt | 45 | Einwirkabschnitt |
| 13 | zweiter Abschnitt | 46 | konvexe Oberfläche |
| 14 | äusseres Wandelement | 47 | Oberfläche |
| 15 | erster Abschnitt | 48 | Verstärkungsrippe |
| 16 | zweiter Abschnitt | 49 | Rastnase |
| 17 | Hauptsteg | A | Zwischenraum |
| 18 | Aufnahmeabschnitt | H | Hohlraum |
| 19 | Klemmabschnitt | S | Sonnenlicht |
| | | M | Montagerichtung |
| 30 | Oberfläche | | |

## Patentansprüche

1. Solarkollektorgehäuse umfassend einen durch Rahmenprofile (1, 1a, 1b) gebildeten Rahmen und eine Solarglasscheibe (3) mit Oberflächen (30, 31) und Seitenkanten (32), wobei das Rahmenprofil (1) einen Kanal (10) umfasst, welcher von Wandelementen (11, 12, 13, 14, 15, 16) begrenzt wird, wobei der Kanal (10) mit einer Dichtmasse befüllt ist, so dass der Übergang zwischen Kanal (10) und Solarglasscheibe (3), insbesondere gegenüber Fluiden, dicht ausgebildet ist, **dadurch gekennzeichnet, dass** das Solarkollektorgehäuse weiterhin mindestens ein Klemmelement (4) umfasst, welches mit mindestens einem Vorsprung (40) zwischen mindestens einer der Seitenkanten (32) und einem den Kanal (10) begrenzenden Wandelement (16) zu liegen kommt, und welches über mindestens ein Einrastelement (44) mit dem Rahmenprofil (1, 1a, 1b) verbindbar ist.

2. Solarkollektorgehäuse nach Anspruch 1, **dadurch gekennzeichnet, dass** der mindestens eine Vorsprung (40) mindestens teilweise in die im Kanal (10) vorhandene Dichtmasse einragt.

3. Solarkollektorgehäuse nach Anspruch 1 oder 2, **dadurch gekennzeichnet, dass** zwischen dem mindestens einen Vorsprung (40) und der Seitenkante (32) und/oder dem Wandelement (16) ein Zwischenraum (A) vorhanden ist, oder dass der mindestens eine Vorsprung (40) in Kontakt mit der Seitenkante (32) und/oder dem Wandelement (16) steht.

4. Solarkollektorgehäuse nach einem der vorhergehenden Ansprüche, **dadurch gekennzeichnet, dass** das Rahmenprofil (1) einen Klemmabschnitt (15) umfasst, in welchen das Klemmelement (4) mit dem Einrastelement (44) einrastbar ist.

5. Solarkollektorgehäuse nach einem der vorhergehenden Ansprüche, **dadurch gekennzeichnet, dass** die Solarglasscheibe (3) unmittelbar in direktem Kontakt auf einem der Wandelemente (13) aufliegt.

6. Solarkollektorgehäuse nach einem der vorhergehenden Ansprüche, **dadurch gekennzeichnet, dass** das Klemmelement (4) mindestens einen Einwirkabschnitt (43, 45) umfasst, und derart mit dem Rahmenprofil (1) verbunden wird, dass das Klemmelement (4) eine gegen das Wandelement (11) wirkende Kraft (F) über den Einwirkabschnitt (43, 45) auf die Solarglasscheibe (3) aufbringt und diese so gegen das Wandelement (11) drückt.

7. Solarkollektorgehäuse nach einem der vorhergehenden Ansprüche, **dadurch gekennzeichnet, dass** das Klemmelement (4) einen ersten Abschnitt (41) und einen zweiten Abschnitt (42) aufweist, welche in einem Winkel (α) zueinander stehen, so dass das Klemmelement (4) im Bereich einer Verbindungsstelle zwischen zwei Rahmenprofilen (1a, 1b), welche im gleichen Winkel (α) stehen, angeordnet werden kann.

8. Solarkollektorgehäuse nach einem der vorhergehenden Ansprüche, **dadurch gekennzeichnet, dass** der minimale Abstand des Zwischenraumes zwischen Einrastelement (44) und Vorsprung (40) im wesentlichen der Dicke des in diesen Zwischenraum einragenden Wandelementes (16) entspricht.

9. Solarkollektorgehäuse nach einem der vorhergehenden Ansprüche, **dadurch gekennzeichnet, dass** das Einrastelement (44) mindestens eine Rastnase (49) umfasst.

10. Solarkollektorgehäuse nach einem der vorhergehenden Ansprüche, **dadurch gekennzeichnet, dass** das Klemmelement (4) mindestens eine Verstärkungsrippe (48) aufweist, welche vorzugsweise eine Form aufweist, die komplementär zu einem Hohlraum (H) ist, der am Rahmenprofil (1, 1a, 1b) gegenüber des Kanals (10) angeordnet ist, so dass die Verstärkungsrippe (48) in diesen Hohlraum (H) einragt, wenn zwei Solarkollektoren bzw. Solarkollektorgehäuse übereinander gestapelt werden.

11. Solarkollektorgehäuse nach einem der vorhergehenden Ansprüche, **dadurch gekennzeichnet, dass** an allen Ecken der Solarglasscheibe (3) je ein Klemmelement (4) angeordnet ist, oder dass mindestens drei Klemmelemente (4) vorgesehen sind.

12. Verfahren zur Montage eines Solarkollektorgehäuses bzw. eines Solarkollektors umfassend einen durch Rahmenprofile (1, 1a, 1b) gebildeten Rahmen und eine Solarglasscheibe (3) mit Oberflächen (30, 31) und Seitenkanten (32), wobei das Rahmenprofil (1) einen Kanal (10) umfasst, welcher von Wandelementen (11, 12, 13, 14, 15, 16) begrenzt wird, **dadurch gekennzeichnet, dass** die Solarglasscheibe (3) auf den Rahmen aufgelegt wird, anschliessend der Kanal (10) mit einer Dichtmasse befüllt wird, so dass der Übergang zwischen Kanal (10) und Solarglasscheibe (3), insbesondere gegenüber Fluiden, dicht ausgebildet ist, und dass anschliessend mindestens ein Klemmelement (45) derart angeordnet wird, dass das Klemmelement (45) mit mindestens einem Vorsprung (40) zwischen mindestens einer der Seitenkanten (32) und zwischen einem den Kanal (10) begrenzenden Wandelement (16) zu liegen kommt, und dass über mindestens ein Einrastelement (44) das Klemmelement (4) mit dem Rahmenprofil (1, 1a, 1b) verbindbar ist.

## Claims

1. A solar collector housing comprising a frame build by frame profiles (1, 1a, 1b) and a solar glass panel (3) with surfaces (30, 31) and side edges (32), wherein the frame profile (1) comprises a channel (10), which is defined by wall elements (11, 12, 13, 14, 15, 16), wherein the channel (10) is filled with a sealant, so that the transition between the channel (10) and the solar glass panel (3) is formed in a tight manner, in particular against fluids, **characterised in that** the solar collector housing further comprising at least one clamping element (4), which lies with at least one protrusion (40) between at least one of the side edges (32) and a wall element (16) defining the channel (10), and which is connectable to the frame profile (1, 1a, 1b) with at least one latching element (44).

2. The solar collector housing according to claim 1, **characterised in that** the at least one protrusion (40) extends at least partly into the sealant that is present in the channel (10).

3. The solar collector housing according to claim 1 or 2, **characterised in that** an interspace (A) is present between the at least one protrusion (40) and the side edge (32) and/or the wall element (16), or **in that** the at least one protrusion (40) is in contact with the side edge (32) and/or the wall element (16).

4. The solar collector housing according to one of the preceding claims, **characterised in that** the frame profile (1) comprises a clamping section (15), in which the clamping element (4) can be snapped in by means of the latching element (44).

5. The solar collector housing according to one of the preceding claims, **characterised in that** the solar glass panel (3) rests in direct contact on one of the wall elements (13).

6. The solar collector housing according to one of the preceding claims, **characterised in that** the clamping element (4) comprises at least one impinging section (43, 45), and is connected to the frame profile (1) in such a manner, that the clamping element (4) applies a Force (F) on the solar glass panel (3), which is acting on the wall element (11) by means of the impinging section (43, 45) and thereby pressing the solar glass panel (3) against the wall element (11).

7. The solar collector housing according to one of the preceding claims, **characterised in that** the clamping element (4) comprises a first section (41) and a second section (42), which are at an angle (a) to one another, so that the clamping element (4) can be arranged in the region of a joint between two frame profiles (1a, 1b), which are at the same angle (α) to one another.

8. The solar collector housing according to one of the preceding claims, **characterised in that** the minimal distance of the interspace between the latching element (44) and the protrusion (40) in essence corresponds to the thickness of the wall element (16), which extends in said interspace.

9. The solar collector housing according to one of the preceding claims, **characterised in that** the latch element (44) comprises at least one locking lug (49).

10. The solar collector housing according to one of the preceding claims, **characterised in that** the clamping element (4) comprises at least one reinforcing rib (48), which preferably has a form, which is complementary to a cavity (H), which is arranged on the frame profile (1, 1a, 1b) opposite to the channel (10), so that the reinforcing rib (48) extends into said cavity (H), when two solar collectors or two solar collector housings respectively are stacked one above the other.

11. The solar collector housing according to one of the preceding claims, **characterised in that** one clamping element (4) is arranged on each of all corners of the solar glass panel (3), or **in that** at least three clamping elements (4) are provided.

12. A method of assembling a solar collector housing or a solar collector respectively comprising a frame built by frame profiles (1, 1a, 1b) and a solar glass panel (3) with surfaces (30, 31) and side edges (32), wherein the frame profile (1) comprises a channel (10), which is defined by wall elements (11, 12, 13, 14, 15, 16), **characterised in that** the solar glass panel (3) is placed on the frame, subsequently the channel (10) is filled with a sealant, so that the transition between the channel (10) and the solar glass panel (3) is formed in a tight manner, in particular against fluids, and **in that** subsequently at least one clamping element (45) is arranged as such, that the clamping element (45) lies with at least one protrusion (40) between at least one of the side edges (32) and a wall element (16) defining the channel (10), and **in that** the clamping element (4) is connectable to the frame profile (1, 1a, 1b) by means of at least one latching element (44).

## Revendications

1. Un boîtier collecteur solaire comprenant un cadre construit par des profils de cadre (1, 1a, 1b) et un panneau de verre solaire (3) avec des surfaces (30, 31) et des bords latéraux (32), où le profil de cadre (1) comprend un canal (10), qui est défini par des éléments de paroi (11, 12, 13, 14, 15, 16), où le canal (10) est rempli d'un matériau d'étanchéité, de sorte que la transition entre le canal (10) et le panneau de verre solaire (3) est formée d'une manière étanche, en particulier contre des fluides, **caractérisé en ce que** le boîtier collecteur solaire comprenant en outre au moins un élément de serrage (4), qui se trouve avec au moins une saillie (40) entre au moins l'un des bords latéraux (32) et un élément de paroi (16) définissant le canal (10), et qui peut être relié au profils de cadre (1, 1a, 1b) avec au moins un élément d'encliquetage (44).

2. Le boîtier du collecteur solaire selon la revendication 1, **caractérisé en ce que** la au moins une saillie (40) s'étend au moins partiellement dans le matériau d'étanchéité qui est présent dans le canal (10).

3. Le boîtier du collecteur solaire selon la revendication 1 ou 2, **caractérisé en ce que** un espace intermédiaire (A) est présente entre la au moins une saillie (40) et le bord latéral (32) et/ou l'élément de paroi (16), ou **en ce que** la au moins une saillie (40) est en contact avec le bord latéral (32) et/ou l'élément de paroi (16).

4. Le boîtier du collecteur solaire selon l'une quelconque des revendications précédentes, **caractérisé en ce que** le profil de cadre (1) comprend une section de serrage (15), dans lequel l'élément de serrage (4) peut être encliqueté par moyen de l'élément d'encliquetage (44).

5. Le boîtier du collecteur solaire selon l'une quelconque des revendications précédentes, **caractérisé en ce que** le panneau de verre solaire (3) repose en contact direct sur l'un des éléments de paroi (13).

6. Le boîtier du collecteur solaire selon l'une quelconque des revendications précédentes, **caractérisé en ce que** l'élément de serrage (4) comprend au moins une partie incidente (43, 45), et est relié à un profil de cadre (1) de telle manière, que l'élément de serrage (4) applique une force (F) sur le panneau de verre solaire (3), qui agit sur l'élément de paroi (11) au moyen de la section incidente (43, 45) et pressant ainsi le panneau de verre solaire (3) contre l'élément de paroi (11).

7. Le boîtier du collecteur solaire selon l'une quelconque des revendications précédentes, **caractérisé en ce que** l'élément de serrage (4) comprend une première section (41) et une seconde section (42), qui sont à un angle (α) l'une à l'autre, de sorte que l'élément de serrage (4) peut être disposé dans la zone d'un joint entre deux profils de cadre (1a, 1b), qui sont au même angle (α) l'un à l'autre.

8. Le boîtier du collecteur solaire selon l'une quelconque des revendications précédentes, **caractérisé en ce que** la distance minimale de l'espace intermédiaire entre l'élément d'encliquetage (44) et la saillie (40) en essence correspond à l'épaisseur de l'élément de paroi (16), qui s'étend dans ledit espace intermédiaire.

9. Le boîtier du collecteur solaire selon l'une quelconque des revendications précédentes, **caractérisé en ce que** l'élément d'encliquetage (44) comprend au moins une patte de verrouillage (49).

10. Le boîtier du collecteur solaire selon l'une quelconque des revendications précédentes, **caractérisé en ce que** l'élément de serrage (4) comprend au moins une nervure de renfort (48), qui a de préférence une forme qui est complémentaire d'une cavité (H), qui est disposée sur le profil de cadre (1, 1a, 1b) opposée au canal (10), de sorte que la nervure de renforcement (48) s'étend dans ladite cavité (H), lorsque deux collecteurs solaires ou deux boîtiers de collecteurs solaires respectivement sont empilées l'un au-dessus de l'autre.

11. Le boîtier du collecteur solaire selon l'une quelconque des revendications précédentes, **caractérisé en ce qu'**un élément de serrage (4) est disposé sur chacun des quatre coins du panneau de verre solaire (3), ou **en ce qu'**au moins trois éléments de serrage (4) sont prévus.

12. Un procédé d'assemblage d'un boîtier de collecteur solaire ou un collecteur solaire respectivement comprenant un cadre construit par des profils de cadre (1, 1a, 1b) et un panneau de verre solaire (3) avec des surfaces (30, 31) et des bords latéraux (32), dans lequel le profil de cadre (1) comprend un canal (10), qui est définie par des éléments de paroi (11, 12, 13, 14, 15, 16), **caractérisé en ce que** le panneau de verre solaire (3) est placée sur le cadre, par la suite le canal (10) est rempli d'un matériau d'étanchéité, de sorte que la transition entre le canal (10) et le panneau de verre solaire (3) est formée d'une manière étanche, en particulier contre les fluides, et **en ce que** ensuite au moins un élément de serrage (45) est arrangé en tant que tel, que l'élément de serrage (45) se situe avec au moins une saillie (40) entre au moins un des bords latéraux (32) et un élément de paroi (16) définissant le canal (10), et **en ce que** l'élément de serrage (4) peut être relié au profil de cadre (1, 1a, 1b) au moyen d'au moins un élément (44) d'encliquetage.
